# EUROPÄISCHE PATENTSCHRIFT

(11) **EP 3 257 098 B1**
(45) Veröffentlichungstag und Bekanntmachung des Hinweises auf die Patenterteilung: **07.06.2023**
(21) Anmeldenummer: 16703295.2
(22) Anmeldetag: 05.02.2016
(51) Int. Cl.: H01M 8/18, H01M 10/04

(54) **BAUELEMENT FÜR EINE REDOX-FLOW-ZELLE UND VERFAHREN ZUR HERSTELLUNG EINES BAUELEMENTS FÜR EINE REDOX-FLOW-ZELLE**
COMPONENT FOR A REDOX FLOW CELL AND METHOD FOR PRODUCING A COMPONENT FOR A REDOX FLOW CELL
ÉLÉMENT STRUCTURAL POUR UNE CELLULE À FLUX REDOX ET SON PROCÉDÉ DE FABRICATION

(30) Priorität: 13.02.2015 DE 102015102123
(43) Veröffentlichungstag der Anmeldung: 20.12.2017
(73) Patentinhaber: Deutsches Zentrum für Luft- und Raumfahrt e.V., 53227 Bonn (DE)
(72) Erfinder: SEEBA, Hayo, 26135 Oldenburg (DE); DI NARDO, Timo, 49716 Meppen (DE); OSTERS, Oliver, 26121 Oldenburg (DE); NUNES-KIRCHNER, Carolina, 26127 Oldenburg (DE)
(74) Vertreter: LBP Lemcke, Brommer & Partner Patentanwälte mbB
(86) Internationale Anmeldenummer: PCT/EP2016/052485
(87) Internationale Veröffentlichungsnummer: WO 2016/128314

(56) Entgegenhaltungen:
- WO-A1-97/38461
- DE-A1-102008 036 848
- RU-C1- 2 067 339

## Beschreibung

Die Erfindung betrifft ein Bauelement für eine Redox-Flow-Zelle sowie ein Verfahren zur Herstellung eines Bauelements für eine Redox-Flow-Zelle.

Redox-Flow-Zellen finden Verwendung in Redox-Flow-Batterien. Hier sind typischerweise mehrere Redox-Flow-Zellen elektrisch seriell verschaltet und werden parallel von Elektrolyten durchflossen. Auf diese Art kann Energie sowohl gespeichert als auch freigesetzt werden. Eine Redox-Flow-Batterie weist somit mindestens ein Bauelement mit zwei Elektrodenrahmen, zwei Elektroden, einer Membran zum lonenaustausch und zwei Bipolar- bzw. Endplatten auf. Die Elektrode ist in dem Elektrodenrahmen angeordnet und wird somit umfangsseitig von dem Elektrodenrahmen umschlossen. Der Elektrodenrahmen mit der Elektrode ist zwischen Membran und Bipolarplatte angeordnet.

Im Betrieb wird die Elektrode typischerweise von einem Elektrolyten durchflossen, in dem der Elektrolyt über in dem Elektrodenrahmen ausgebildete Leitungen zu- und abgeführt wird.

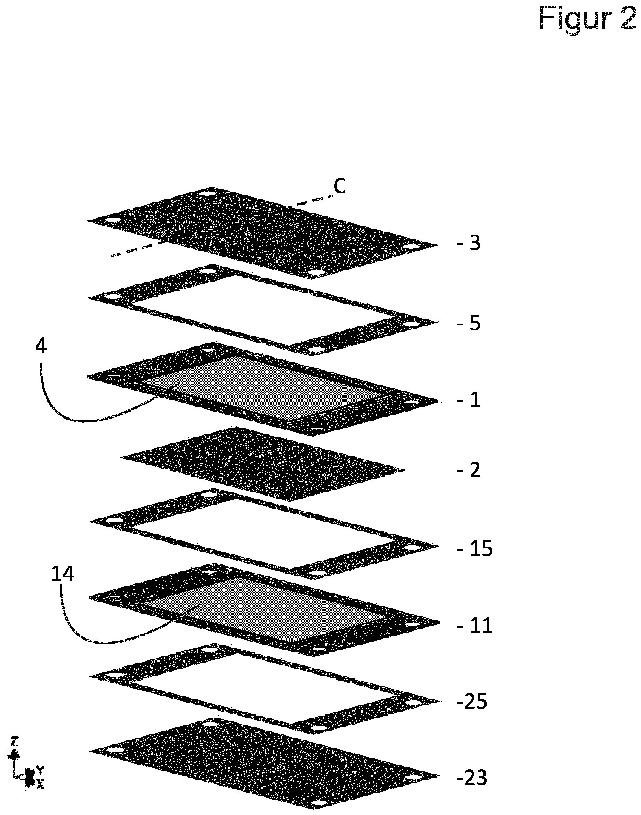

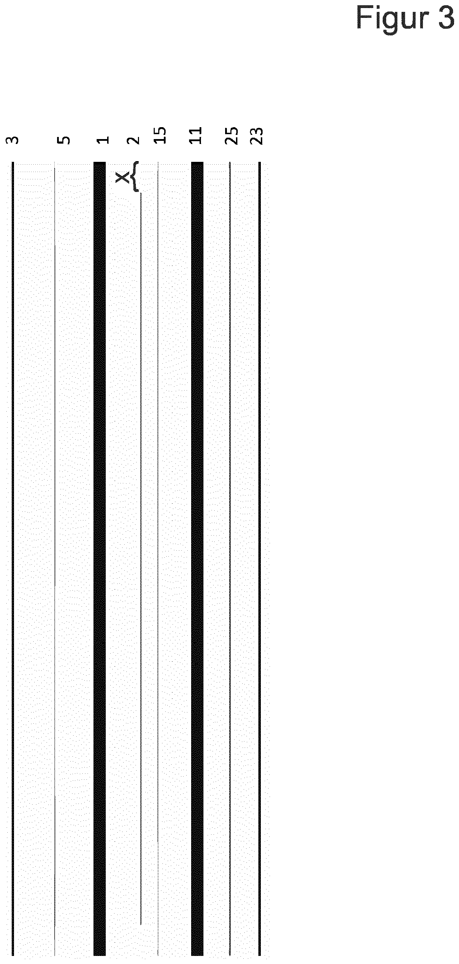

Eine solche Redox-Flow-Batterie ist aus T. Shigematsu, "Redox Flow Battery for Energy Storage", Sei Technical Review, Number 73, October 2011, pp.4-13, insbesondere gemäß Figuren 2 und 3 und zugehöriger Beschreibung bekannt.

Durch die Komplexität solcher Systeme von elektrochemischen Zellzusammenschlüssen ist die Umsetzung in industriellen Fertigungsprozessen erschwert. Ebenso gestaltet sich die Wartung aufwendig.

Der vorliegenden Erfindung liegt daher die Aufgabe zugrunde, ein Bauelement für eine Redox-Flow-Zelle sowie ein Verfahren zur Herstellung eines Bauelements für eine Redox-Flow-Zelle zur Verfügung zu stellen, welche das Risiko von fehlerhaften Zellen verringert und so die Implementierung in industrielle Fertigungsprozesse erleichtert.

Gelöst ist diese Aufgabe durch ein Bauelement für eine Redox-Flow-Zelle gemäß Anspruch 1 sowie ein Verfahren zur Herstellung eines Bauelements für eine Redox-Flow-Zelle gemäß Anspruch 10. Vorteilhafte Ausgestaltungen des Bauelements finden sich in den Ansprüchen 2 bis 10. Vorteilhafte Ausgestaltungen des Verfahrens finden sich in den Ansprüchen 12 bis 15. Hiermit wird der Inhalt sämtlicher Ansprüche explizit per Referenz in die Beschreibung einbezogen.

Das erfindungsgemäße Bauelement für eine Redox-Flow-Zelle wird vorzugsweise mittels des erfindungsgemäßen Verfahrens hergestellt, insbesondere einer bevorzugten Ausführungsform hiervon. Das erfindungsgemäße Verfahren ist vorzugsweise zur Herstellung eines erfindungsgemäßen Bauelements ausgebildet, insbesondere einer bevorzugten Ausführungsform hiervon.

Die Erfindung ist auf der Erkenntnis begründet, dass Redox-Flow-Zellen Multikomponentensysteme sind, welche unter Druck vom Elektrolyten durchflossen werden, so dass bei Redox-Flow-Batterien gemäß Stand der Technik eine Vielzahl an Dichtungen notwendig ist. Ebenso ist eine passgenaue Anordnung beispielsweise der Elektrode an dem Elektrodenrahmen oder zwischen zwei Elektrodenrahmen notwendig, so dass auch hier erhebliche Fehlerquellen bestehen.

Das erfindungsgemäße Bauelement für eine Redox-Flow-Zelle weist einen Elektrodenrahmen, eine Elektrode, eine Membran und eine Bipolarplatte auf. Die Elektrode ist in dem Elektrodenrahmen angeordnet und wird von diesem umfangsseitig umschlossen. Der Elektrodenrahmen ist zwischen Membran und Bipolarplatte angeordnet. Ein solcher Teilaufbau ist grundsätzlich auch bei Redox-Flow-Batterien aus dem Stand der Technik bekannt. Das Bauelement ist somit zumindest als Halbzelle ausgebildet.

Wesentlich ist, dass der Elektrodenrahmen mit zumindest der Membran mittels Kleben stoffschlüssig verbunden ist.

Hierdurch ergeben sich erhebliche Vorteile im Vergleich zu vorbekannten Redox-Flow-Zellen, da im Bereich der stoffschlüssigen Verbindung zwischen Elektrodenrahmen und Membran keine Dichtung erforderlich ist, da die stoffschlüssige Verbindung zwischen Elektrodenrahmen und Membran den Zusammenbau einer Redox-Flow-Batterie erheblich vereinfacht und somit die Implementierung industrieller Fertigungsprozesse ermöglicht und da eine stoffschlüssige Verbindung eine weniger riskant im Hinblick auf Undichtigkeiten im Vergleich zu dem Verwenden einer konventionellen Dichtung darstellt und somit die Ausfallwahrscheinlichkeit und der Wartungsaufwand verringert wird. Weiterhin ermöglicht die stoffschlüssige Verbindung zwischen Membran und Elektrodenrahmen die Verwendung kleinerer Membranflächen, verglichen mit einer baugleichen Redox-Flow-Zelle unter Einsatz von konventionellen Dichtungen. Die Kosten einer Redox-Flow-Zelle sind jedoch maßgeblich (typischerweise zu etwa 20 %) durch die Kosten der Membran bestimmt, so dass eine Materialeinsparung bei der Membran in erheblichem Maße zu einer Kostenreduzierung führt.

Zusätzlich ist durch das stoffschlüssige Verbinden der Membran mit dem Elektrodenrahmen ein kompakterer Aufbau möglich, da beispielsweise ein Schichtsystem Membran/Elektrodenrahmen bei stoffschlüssiger Verbindung dünner zu realisieren ist, verglichen mit der Verwendung einer Dichtung zwischen Membran und Elektrodenrahmen.

Die stoffschlüssige Verbindung zwischen Elektrodenrahmen und zumindest Membran mittels Verkleben weist weitere Vorteile auf:
- Wird der Fokus auf einen industriellen Herstellungsprozess gerichtet, wird ersichtlich, dass massive Arbeitszeit und Kostenreduzierung möglich ist, dadurch dass Kleber vollautomatisiert auftragbar ist. Dies gilt für Klebstoffe aller Art. Insbesondere aber die Verarbeitung von Klebefolien, wie weiter unten beschrieben, kann als äußerst effizienter Prozess, insbesondere bevorzugt als Rolle-zu-Rolle-Prozess realisiert werden, bei dem die zu klebenden Fügeteile durch Walzenspalte semikontinuierlich gefügt werden. Weiterhin sind diese Vorteile insbesondere bei der Verwendung eines viskosen Strukturklebstoffs gegeben, insbesondere ein Klebstoff oder mehrere Klebestoffe auf der Basis eines oder mehrerer Elemente der Gruppe Epoxidharz, Acrylate, Polyurethan, Silikon, Silanmodifizierte Polymere.

- Ein vollständig geklebter Stack erlaubt das Verringern oder sogar Weglassen einer äußeren Verspannung. Dies führt zu einer Reduktion der benötigten Bauteile und somit zu einer Reduktion der Kosten als auch des Gewichts des gesamten Stacks. Zusätzlich können Kosten durch eine schnellere Montage (ua. auf Grund der geringeren Anzahl der Bauteile) eingespart werden. Weiterhin erlaubt das Verkleben eines Stacks den Einsatz äußerst kostengünstiger Materialien, da die verringerte oder fehlende Verpressung mechanisch weniger hochwertige Materialien erlaubt (bei starker Verpressung neigen viele übliche Kunststoffe zum plastischen fließen).
- Durch Klebstoffe können Werkstoffe gefügt werden, die einem thermischen Fügeverfahren nicht zugänglich sind. Die Anwendbarkeit auf nicht schweißbare Materialien kann beispielsweise Elektrodenrahmen betreffen.
- Unterschiedliche Werkstoffe können mittels Kleben miteinander gefügt werden. Im Gegensatz zum Schweißen werden nicht nur keine Thermoplasten benötigt, sondern auch keine Materialien mit gleichen oder mindestens ähnlichen Schmelztemperaturen. Die Materialanforderungen sind folglich geringer.
- Die Fügeteile werden keinen großen Temperaturen ausgesetzt, weshalb kein Materialverzug auftritt und keine Eigenschaftsveränderungen/Degradationen erscheinen.
- Es sind Verbindungen sehr dünner Bauteile (Vorteilhaft bezüglich Material- und Gewichtseinsparung und dadurch Kostenersparnis) möglich. Schweißen beispielsweise weist hingegen zumeist einen verhältnismäßig kleinen Fügebereich auf und ist in der Regel nicht anwendbar, wenn das Ausgangsmaterial sehr dünn (Materialarm) ist.
- Eine Klebverbindung kann gleichzeitig als Dichtung wirken. Klebeverbindungen erlauben eine stoffschlüssige Verbindung mit allen Komponenten eines Redox-Flow-Stacks. Zusätzlich sind großflächige Verbindungen und somit deutlich fehlertolerantere Dichtungen möglich.
- Die mechanische Kraftverteilung bezogen auf die belastete Fläche einer geklebten Fügung ist im Gegensatz zu einer geschweißten Verbindung zumeist deutlich größer. Dies wiederum kann zu geringer dimensionierten Bauteilen und somit wiederum zu einer Material- und Kostenersparnis führen.

Bei dem erfindungsgemäßen Verfahren zur Herstellung eines Bauelements für eine Redox-Flow-Zelle wird ein Elektrodenrahmen mit einer Elektrode zwischen einer Membran und einer Bipolarplatte angeordnet. Wesentlich ist, dass der Elektrodenrahmen zumindest mit der Membran mittels Kleben stoffschlüssig verbunden wird. Hierdurch ergeben sich die vorgenannten Vorteile.

Die genannten Vorteile treten in noch höherem Maße auf, wenn in einer bevorzugten Ausgestaltung des erfindungsgemäßen Bauelements der Elektrodenrahmen zusätzlich mit der Bipolarplatte stoffschlüssig verbunden ist, bevorzugt mittels Kleben. Hierdurch sind somit die Vorteile der einfachen Handhabbarkeit, insbesondere bezüglich einer vereinfachten Assemblierung bei einer Stackherstellung aus mehreren Zellen, der kompakteren Bauweise und der erhöhten Sicherheit einer flüssigkeitsdichten Verbindung auch auf die Verbindung zwischen Elektrodenrahmen und Bipolarplatte übertragen.

Vorzugsweise wird bei dem erfindungsgemäßen Verfahren daher zusätzlich der Elektrodenrahmen mit der Bipolarplatte stoffschlüssig verbunden, bevorzugt mittels Kleben.

Besonders vorteilhaft ist es jedoch, dass die stoffschlüssige Verbindung zwischen Elektrodenrahmen und/oder Bipolarplatte mittels Kleben ausgebildet ist. Hierdurch kann einerseits in einfacher Weise eine stabile, dauerhaft fluiddichte, stoffschlüssige Verbindung erzielt werden. Darüber hinaus ist derart eine einfache Implementierung in industrielle Fertigungstechniken durch Aufbringen eines Klebstoffes auf ein oder auf beide zusammenzufügende Elemente und anschließendes Aneinanderdrücken, insbesondere Verpressen der beiden Elemente möglich.

Vorzugsweise werden jedoch membranschonende Verfahren verwendet, insbesondere Verfahren, welche keine Hitzeeinwirkung und insbesondere kein Aufschmelzen der Membran bewirken. Hier bietet das stoffschlüssige Verbinden mittels Kleben weitere Vorteile, da beim Klebevorgang kein oder nur ein geringer Wärmeeintrag in die zu verklebenden Materialien erfolgt.

Es liegt hierbei im Rahmen der Erfindung, die stoffschlüssige Verbindung mittels Kleben mit einer adhäsiven Verfahrenstechnik, insbesondere durch automatische Dispenser, Aufsprühen oder Rakeln eines Klebstoffs oder durch Transferkleben auszubilden. Als Klebstoffe können insbesondere physikalisch abbindende Klebstoffe und/oder chemisch härtende Klebstoffe und/oder adhäsive Klebstoffe verwendet werden.

Besonders vorteilhaft ist die Verwendung einer Klebefolie zur Ausbildung der stoffschlüssigen Verbindung. Eine Klebefolie ermöglicht eine einfache Handhabung. Insbesondere kann in vorteilhafter Weise die Klebefolie vorab in der gewünschten Flächenform für die stoffschlüssige Verbindung ausgebildet sein, so dass in einfacher, fehlertoleranter Weise das Ausbilden einer stoffschlüssigen Verbindung in den gewünschten Bereichen ermöglicht wird.

In einer weiteren bevorzugten Ausführungsform des erfindungsgemäßen Bauelements ist mittels der stoffschlüssigen Verbindung eine flüssigkeitsdichte Abdichtung zwischen Elektrodenrahmen und Membran zumindest abgesehen von einem oder mehreren Kanälen zum Zu- und/oder Abführen eines flüssigen Elektrolyten zu einer Elektrode ausgebildet. In dieser bevorzugten Ausführungsform ist die stoffschlüssige Verbindung zwischen Membran und Elektrodenrahmen somit im Wesentlichen umlaufend ausgebildet, gegebenenfalls unter Aussparung von Bereichen für den Zu- und/oder Abfluss eines Elektrolyten zwischen Elektrodenrahmen und Membran zu der Elektrode.

Besonders bevorzugt ist jedoch, Leitungswege zum Zu- und Ableiten des flüssigen Elektrolyten zu der Membran in dem Elektrodenrahmen auszubilden, so dass eine umlaufende, insbesondere vollständig umlaufende flüssigkeitsdichte stoffschlüssige Verbindung zwischen Elektrodenrahmen und Membran bei dieser besonders bevorzugten Ausgestaltung ausgebildet wird.

Hierdurch erübrigt sich das Verwenden zusätzlicher Dichtungen, jedenfalls zwischen Elektrodenrahmen und Membran.

Dieser Vorteil wird bevorzugt auch auf die Verbindung zwischen Elektrodenrahmen und Bipolarplatte übertragen, indem in einer weiteren bevorzugten Ausführungsform mittels der stoffschlüssigen Verbindung eine flüssigkeitsdichte Abdichtung zwischen Elektrodenrahmen und Bipolarplatte zumindest abgesehen von einem oder mehreren Kanälen zum Zu- und/oder Abführen eines flüssigen Elektrolyten zu der Elektrode ausgebildet ist. Auch hier ist es besonders vorteilhaft, dass Leitungen zum Zu- und/oder Abführen des Elektrolyten in dem Elektrodenrahmen ausgebildet sind und dass eine umlaufende, insbesondere vollständig umlaufende flüssigkeitsdichte stoffschlüssige Verbindung zwischen Elektrodenrahmen und Bipolarplatte ausgebildet ist. Auch hier ergibt sich ein erheblicher Vorteil dadurch, dass auf eine Dichtung zwischen Elektrodenrahmen und Bipolarplatte verzichtet werden kann.

Besonders vorteilhaft ist es daher, den Elektrodenrahmen sowohl mit der Membran, als auch mit der Bipolarplatte jeweils über eine vollständig umlaufende, flüssigkeitsdichte stoffschlüssige Verbindung auszubilden, bevorzugt mittels Kleben, so dass jedenfalls zwischen diesen Komponenten keine weitere Dichtung benötigt wird.

Wie eingangs erwähnt, stellen die Kosten, insbesondere die Materialkosten der Membran einen erheblichen Anteil an den Gesamtkosten einer Redox-Flow-Zelle. Es ist daher vorteilhaft, wenn die Membran den Rahmen umlaufend nur geringfügig überlappt. Bezogen auf die Ausdehnung des Rahmens ist es aus den gleichen Gründen vorteilhaft, wenn die Membran den Rahmen in Richtung der Länge und in Richtung der Breite um weniger als 15%, bevorzugt um weniger als 10%, weiter bevorzugt um weniger als 5%, bezogen auf die Länge bzw. die Breite des Rahmens, überlappt. Bei typischen Maßen von Redox-Flow-Zellen ist es vorteilhaft, dass die Membran den Rahmen umlaufend um weniger als 2 cm, weiter bevorzugt um weniger als 1,5 cm, insbesondere um weniger als 1 cm überlappt.

Eine derartige Ausgestaltung der Membran ist insbesondere vorteilhaft in Verbindung mit der zuvor beschriebenen umlaufenden stoffschlüssigen Verbindung zwischen Membran und Elektrodenrahmen.

Die stoffschlüssige Verbindung von zumindest Elektrodenrahmen und Membran und vorzugsweise zusätzlich von Elektrodenrahmen und Bipolarplatte ermöglicht die Anordnung der Elektrode innerhalb des Elektrodenrahmens, ohne eine stoffschlüssige Verbindung der Elektrode mit dem Elektrodenrahmen und/oder ohne ein Verpressen der Elektrode zwischen Elektrodenrahmen und Membran oder zwischen Elektrodenrahmen und Bipolarplatte. Hierdurch wird der Herstellungsablauf vereinfacht. Hiervon unbenommen wird vorzugsweise ein Anpressdruck zwischen Elektrode und Bipolarplatte zum Ausbilden eines gut leitenden elektrischen Kontakts erzielt, indem die Elektrode in unverbautem Zustand eine größere Dicke aufweist, als der Abstand zwischen Bipolarplatte und Membran im verbauten Zustand.

Vorzugsweise ist daher die Elektrode derart in dem Bauelement angeordnet, dass die Elektrode lediglich mittels Formschluss seitlich durch den Elektrodenrahmen und senkrecht zu einer flächigen Ausdehnung der Elektrode einerseits durch die Bipolarplatte und andererseits durch die Membran gehalten wird, insbesondere formschlüssig gehalten wird.

In einer weiteren bevorzugten Ausführungsform wird eine vollintegrierte Einzelzelle ausgebildet. Hierzu wird ein erfindungsgemäßes Bauelement mit der Bipolarplatte als erste Bipolarplatte, dem Elektrodenrahmen als ersten Elektrodenrahmen, der Elektrode als erste Elektrode und der Membran zusätzlich mit zumindest einem zweiten Elektrodenrahmen und einer zweiten Elektrode ausgebildet. Diese vollintegrierte Einzelzelle weist einen Schichtaufbau auf, mit unmittelbar oder mittelbar angeordneten Elementen in der Abfolge erste Bipolarplatte, erster Elektrodenrahmen mit erster Elektrode, Membran, zweiter Elektrodenrahmen mit zweiter Elektrode. Weiterhin ist eine stoffschlüssige Verbindung zumindest zwischen erster Bipolarplatte und erstem Elektrodenrahmen, zwischen erstem Elektrodenrahmen und Membran sowie zwischen Membran und zweitem Elektrodenrahmen ausgebildet. Hierbei liegt es im Rahmen der Erfindung, Klebstoff zwischen erstem und zweitem Elektrodenrahmen vorzusehen, wobei die Membran in den Klebstoff eingepresst ist. Ebenso kann - insbesondere bei Verwendung dickerer Membranen - alternativ oder zusätzlich Klebstoff auf beidseitig in Randbereichen der Membran zur Verbindung mit dem ersten Elektrodenrahmen einerseits und dem zweiten Elektrodenrahmen andererseits verwendet werden. In einer weiteren bevorzugten Ausführungsform wird abschließend eine Bipolar- oder eine Endplatte an dem zweiten Elektrodenrahmen angebracht, insbesondere bevorzugt adhäsiv appliziert.

Eine solche vollintegrierte Einzelzelle weist den Vorteil auf, dass in einem ersten Schritt eine Mehrzahl solcher vollintegrierter Einzelzellen ausgebildet werden kann. Anschließend kann in einfacher und mittels industrieller Fertigungstechniken realisierbarer Weise ein integrierter Zellzusammenschluss ausgebildet werden, indem der zweite Elektrodenrahmen einer vollintegrierten Einzelzelle an der Bipolarplatte einer benachbarten vollintegrierten Einzelzelle angeordnet wird und so in einfacher Weise ein Schichtaufbau umfassend eine Mehrzahl in Reihe angeordneter vollintegrierter Einzelzellen realisiert werden kann.

Die vorbeschriebene Ausgestaltung der vollintegrierten Einzelzellen weist den Vorteil auf, dass gleich ausgebildete vollintegrierte Einzelzellen aneinander angeordnet werden können und somit in verfahrenstechnisch minder aufwendigen Weise ein Zellzusammenschluss unter Aneinanderreihung gleicher Elemente ausgebildet werden kann.

In einer alternativen Ausgestaltung wird die vollintegrierte Einzelzelle zusätzlich mit einer zweiten Bipolarplatte ausgebildet. Die zweite Bipolarplatte ist an der der Membran abgewandten Seite des zweiten Elektrodenrahmens mittelbar oder bevorzugt unmittelbar angeordnet und ist bevorzugt stoffschlüssig mit dem zweiten Elektrodenrahmen verbunden. Diese derart erweiterte vollintegrierte Einzelzelle weist somit den Vorteil auf, dass beiderseitig ein Abschluss jeweils durch eine Bipolarplatte erfolgt, so dass eine einfachere Handhabung möglich ist.

Zum Ausbilden eines Zellzusammenschlusses werden zusätzlich Zwischenelemente ausgebildet, welche jeweils einen ersten Elektrodenrahmen mit einer ersten Elektrode, eine Membran und einen zweiten Elektrodenrahmen mit einer zweiten Elektrode umfassen. Diese Elemente sind mittelbar oder bevorzugt unmittelbar in der Schichtabfolge erster Elektrodenrahmen mit erster Elektrode, Membran, zweiter Elektrodenrahmen mit zweiter Elektrode ausgebildet. Zum Anfertigen eines Zellzusammenschlusses wird nun jeweils zwischen zwei wie zuvor beschrieben erweiterte vollintegrierte Einzelzellen jeweils ein Zwischenelement angeordnet, sodass das Zwischenelement beidseitig an eine Bipolarplatte der jeweils benachbarten erweitert ausgebildeten vollintegrierten Einzelzelle angrenzt. Zur einfacheren Handhabung sind auch zumindest die Elemente erster Elektrodenrahmen, Membran und zweiter Elektrodenrahmen bevorzugt stoffschlüssig miteinander verbunden.

Es liegt hierbei im Rahmen der Erfindung, die vorbeschriebenen vollintegrierten Einzelzellen - gegebenfalls unter Zwischenschaltung der Zwischenelemente - aneinander anzuordnen und in an sich bekannter Weise zu verpressen, beispielsweise unter Verwendung von Gewindestangen wie aus dem Stand der Technik bekannt. Hierdurch ergibt sich der Vorteil, dass einerseits durch Lösen der Verpressung, beispielsweise durch Lösen der Gewindestangen, eine Wartung möglich ist, hierbei jedoch erheblich weniger Einzelteile gehandhabt werden müssen, aufgrund der vollintegrierten Einzelzellen mit den zuvor beschriebenen stoffschlüssigen Verbindungen. Ein wichtiger Vorteil bei Verwendung von vollintegrierten Einzelzellen ist somit die einfache Wartung und Austausch falls eine Zelle mit schlechter Leistung oder Fehlfunktion in der Batterie identifiziert wird. Somit muss nicht der ganze Stack ersetzt werden. Das ist insbesondere vorteilhaft gegenüber einer Zelle mit konventionellen Dichtungen.

Insbesondere in diesem Fall werden vorteilhafter Weise in den Bereichen, in welchen die vollintegrierte Einzelzelle ohne stoffschlüssige Verbindung aneinandergrenzen, d. h. insbesondere zwischen zweiten Elektrodenrahmen einer ersten vollintegrierten Einzelzelle und Bipolarplatte einer benachbarten, zweiten vollintegrierten Einzelzelle Dichtungen zur Ausbildung einer flüssigkeitsdichten Dichtung verwendet, insbesondere bevorzugt O-Ring-Dichtungen.

Eine besonders kostengünstige Ausgestaltung bei der Herstellung ergibt sich hierbei, in dem in einer bevorzugten Ausführungsform die Einzelzellen unter Zwischenfügung eines Klebemittels aneinander angeordnet werden und in einem gemeinsamen Verfahrensschritt die stoffschlüssige Verbindung der Einzelzellen miteinander erfolgt, bevorzugt mittels Kleben.

Vorzugsweise werden mehrere, insbesondere sämtliche der vorgenannten stoffschlüssigen Verbindungen mittels Kleben ausgebildet.

Als Klebstoff wird bevorzugt ein viskoser Strukturklebstoff verwendet, insbesondere ein Klebstoff oder mehrere Klebestoffe auf der Basis eines oder mehrerer Elemente der Gruppe Epoxidharz, Acrylate, Polyurethan, Silikon, Silanmodifizierte Polymere. Insbesondere solche Klebstoffe können bei industriellen Herstellungsprozessen mittels (voll)automatischer Dispenser effizient und kostengünstig aufgetragen werden.

Als Klebefolie wird bevorzugt eine Trägerfolie verwendet, welche beidseitig mit Klebstoff beschichtet ist. Hierbei wird bevorzugt ein Klebstoff auf Acrylatbasis verwendet. Als Trägerfolie ist insbesondere eine Kunststofffolie geeignet.

Weitere bevorzugte Merkmale und Ausführungsformen werden im Folgenden anhand von Ausführungsbeispielen und den Figuren beschrieben. Dabei zeigt:
- Figur 1: ein erstes Ausführungsbeispiel von zwei Bauelementen für eine Redox-Flow-Zelle mit einer gemeinsamen Membran, wobei die Elektroden nicht dargestellt sind;
- Figur 2: das Ausführungsbeispiel gemäß Figur 1 mit dargestellten Elektroden;
- Figur 3: eine Schnittdarstellung gemäß Schnittlinie A in Figur 1;
- Figur 4: eine Schnittdarstellung gemäß Schnittlinie B in Figur 1 und
- Figur 5: eine Schnittdarstellung gemäß Schnittlinie C in Figur 2.

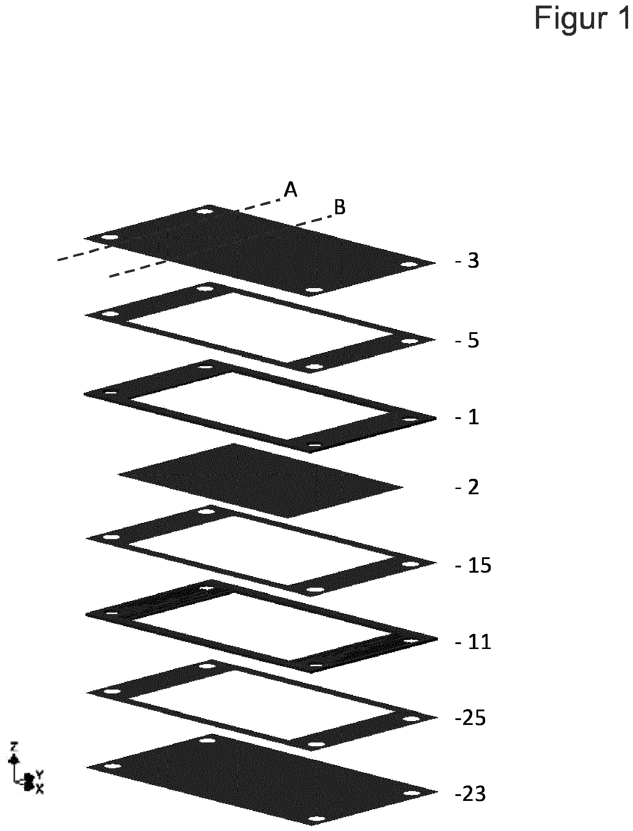

Alle Figuren zeigen schematische Darstellungen. In den Figuren 1 bis 5 bezeichnen gleiche Bezugszeichen gleiche oder gleichwirkende Elemente.

Die Figuren 1 und 2 zeigen Explosionsdarstellungen in perspektivischer Ansicht, um die Anordnung und Ausgestaltung der einzelnen Schichten besser darstellen zu können.

In Figur 1 ist ein Ausführungsbeispiel eines erfindungsgemäßen Bauelementes für eine Redox-Flow-Zelle in Explosionsdarstellung gezeigt. Dieses umfasst einen Elektrodenrahmen 1, eine Membran 2 und eine Bipolarplatte 3. Der Elektrodenrahmen 1 weist eine Aussparung auf, um eine Elektrode 4 aufzunehmen. Dies ist in Figur 2 mit der als Filzelektrode ausgebildeten Elektrode 4 gezeigt.

Die Elektrode 4 ist somit von dem Elektrodenrahmen 1 umfangseitig umschlossen. Weiterhin ist der Elektrodenrahmen 1 zwischen Membran 2 und Bipolarplatte 3 angeordnet.

Mittels eines Klebefilms 5 ist der Elektrodenrahmen 1 formschlüssig mit der Bipolarplatte 3 verbunden. Hierdurch ist auch eine flüssigkeitsdichte Verbindung zwischen Elektrodenrahmen 1 und Bipolarplatte 3 gegeben, so dass ein Elektrolyt, welches der Elektrode 4 bei Benutzung durch (nicht dargestellte) Leitungen, welche im Elektrodenrahmen 1 ausgebildet sind, zugeführt wird, somit nicht zwischen Elektrodenrahmen 1 und Bipolarplatte 3 austreten kann. Der Klebefilm 5 übernimmt somit die Funktion der im Stand der Technik üblichen Gewindestangen hinsichtlich der Anordnung der Bipolarplatte 3 an dem Elektrodenrahmen 1 und darüber hinaus die Funktion der im Stand der Technik üblichen O-Ring-Dichtung zwischen Elektrodenrahmen 1 und Bipolarplatte 3.

Mit dem Bauelement gemäß Figur 1 ist weiterhin eine vollintegrierte Einzelzelle ausgebildet, indem zusätzlich ein zweiter Elektrodenrahmen 11 und eine zweite Elektrode 14 vorgesehen ist:
Die vollintegrierte Einzelzelle weist somit die Bipolarplatte 3 als erste Bipolarplatte, den Elektrodenrahmen 1 als ersten Elektrodenrahmen sowie die Membran 2 auf und zusätzlich den zweiten Elektrodenrahmen 11 mit zweiter Elektrode 14 wie in Figur 2 dargestellt.

Über die zuvor bereits beschriebene stoffschlüssige Verbindung des ersten Elektrodenrahmen 1 mit der Bipolarplatte 3 mittels des Klebefilms 5 als ersten Klebefilm hinaus, ist weiterhin der zweite Elektrodenrahmen 11 mittels eines zweiten Klebefilms 15 stoffschlüssig mit der Membran 2 verbunden.

Die Membran 2 überlappt sowohl den Elektrodenrahmen 11 als auch den Elektrodenrahmen 1 nur geringfügig, insbesondere um weniger als 10% sowohl in Richtung der Länge (x-Richtung) bezogen auf die Länge des Rahmens, als auch in Richtung der Breite (y-Richtung) bezogen auf die Breite des Rahmens, wie nachfolgend zu den Figuren 3 bis 5 näher erläutert wird.

Hierdurch erfüllt der zweite Klebefilm 15 die Funktion, sowohl den ersten Elektrodenrahmen 1 mit dem zweiten Elektrodenrahmen 11 stoffschlüssig zu verbinden, als auch die Membran 2 mit dem zweiten Elektrodenrahmen 11 stoffschlüssig zu verbinden. In der Gesamtwirkung ist hierdurch die Membran 2 auch unverrückbar mit dem ersten Elektrodenrahmen 1 verbunden.

Darüber hinaus wirkt der zweite Klebefilm 15 als Dichtung zwischen erstem Elektrodenrahmen 1, zweitem Elektrodenrahmen 11 und der dazwischen gelagerten Membran 2.

In einem Ausführungsbeispiel eines erfindungsgemäßen Verfahrens werden von der vorbeschriebenen vollintegrierten Einzelzelle zunächst mehrere ausgebildet (beispielsweise 10 Stück). Anschließend werden die vollintegrierten Einzelzellen übereinander angeordnet, jeweils unter Zwischenschaltung eines weiteren Klebefilms:
In den Figuren 1 und 2 ist jeweils eine weitere Bipolarplatte 23 dargestellt, welche einer (nicht vollständig dargestellten) benachbart angeordneten, weiteren vollintegrierten Einzelzelle zugeordnet ist bzw. als Endplatte appliziert wird. Zwischen der weiteren Bipolarplatte 23 und dem zweiten Elektrodenrahmen 11 der oberen vollintegrierten Einzelzelle wird ein dritter Klebefilm 25 zum stoffschlüssigen Verbinden des zweiten Elektrodenrahmen 11 mit der weiteren Bipolarplatte 23 der weiteren Einzelzelle angeordnet.

Auf diese Weise kann kostengünstig ein Stapel übereinander angeordneter Einzelzellen zur Ausbildung einer Redox-Flow-Batterie ausgebildet werden. Die mechanische Stabilität ist hierbei über die Klebefilme (5, 15, 25) gewährleistet. Zusätzlich können in einer weiter bevorzugten Ausführungsform Bohrungen beispielsweise in den Eckbereichen der Bipolarplatten und Elektrodenrahmen (1, 11) vorgesehen sein, durch welche Gewindestangen geführt werden können, um zusätzlich ein Aneinanderpressen der vorbeschriebenen Elemente zu bewirken. Beispielhaft sind in Figur 1 zwei Bohrungen 7a und 7b zur Aufnahme solcher Gewindestangen gekennzeichnet.

In einem alternativen Ausführungsbeispiel ist der dritte Klebefilm 25 durch eine Flachdichtung (nicht dargestellt) ersetzt (ebenso liegt die Verwendung einer als O-Ring ausgebildeten Dichtung im Rahmen der Erfindung) und der zweite Elektrodenrahmen 11 weist eine entsprechende Führungsaufnahme zur örtlichen Fixierung dieser O-Ring-Dichtung auf. In diesem Fall sind somit lediglich Elemente der voll integrierten Einzelzelle mittels des ersten Klebefilms 5 und des zweiten Klebefilms 15 stoffflüssig miteinander verbunden. Die voll integrierten Einzelzellen im Stapelaufbau werden hingegen mittels der vorgenannten Gewindestangen aneinandergepresst, wobei die jeweils zwischengeordneten O-Ring-Dichtungen die entsprechende Dichtwirkung gegenüber der bei Benutzung verwendeten flüssigen Elektrolyte zwischen dem zweiten Elektrodenrahmen 11 der einen voll integrierten Einzelzelle und der Bipolarplatte 23 der benachbarten voll integrierten Einzelzelle bewirken.

In Figur 2 ist wie zuvor beschrieben, die Explosionsdarstellung gemäß Figur 1 mit in dem ersten Elektrodenrahmen 1 angeordneter erster Elektrode 4 und in dem zweiten Elektrodenrahmen 11 angeordneter zweiter Elektrode 14 dargestellt.

Figur 3 zeigt einen Schnitt entlang der Schnittlinie A in Figur 1. Die Schnittebene steht hierbei senkrecht zu der ersten Bipolarplatte 3 und somit auch senkrecht zu den parallel zu der ersten Bipolarplatte 3 liegenden Elementen erster Klebefilm 5, erster Elektrodenrahmen 1, Membran 2, zweiter Klebefilm 15, zweiter Elektrodenrahmen 11, dritter Klebefilm 15 und weitere Bipolarplatte 23.

Die Figuren 3 bis 5 geben ebenfalls die voneinander beanstandete Ansicht der Einzelelemente gemäß einer Explosionsdarstellung zwecks besserer Übersichtlichkeit wieder. Tatsächlich liegen die einzelnen Elemente unmittelbar aneinander an.

Wie in Figur 3 ersichtlich, weist die Membran 2 einen Abstand X beidseitig zu den äußeren Rändern der übrigen Elemente auf. Insbesondere überlappen somit der zweite Klebefilm 15 sowie die beiden Elektrodenrahmen 1 und 11 die Membran 2. Hierdurch wird somit mittels des zweiten Klebefilms 15 einerseits die Membran 2 stoffflüssig mit dem zweiten Elektrodenrahmen 11 verbunden. Ebenso wird jedoch zumindest in Randbereichen der zweite Elektrodenrahmen 11 mittels des zweiten Klebefilms 15 stoffflüssig mit dem ersten Elektrodenrahmen 1 verbunden.

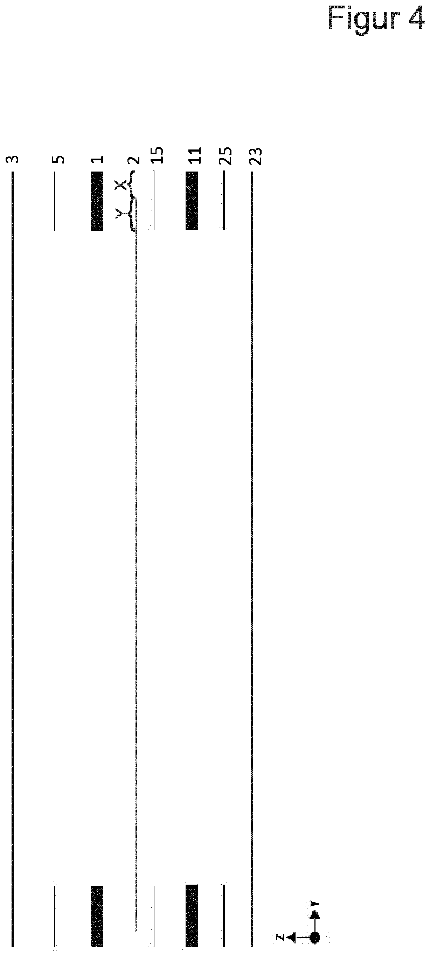

Figur 4 zeigt einen Schnitt gemäß der in Figur 1 dargestellten Schnittlinie B, wobei auch hier die Schnittebene senkrecht zur Bipolarplatte 3 steht.

In diesem Schnittbild ist ersichtlich, dass in den Bereichen, in welchen die Elektrodenrahmen 1 und 11 eine Aussparung zur Aufnahme der Elektroden aufweisen, auch die Membran 2 die Elektrodenrahmen (1, 11) um einen Abstand Y umfangsseitig überlappt.

Aufgrund der Überlappung um die Länge Y kann somit in einfacher Weise die Membran 2 mittels des zweiten Klebefilms 15 stoffflüssig mit dem Elektrodenrahmen 11 verbunden werden.

Weiterhin wird ermöglicht, der Abstand X zwischen dem äußeren Rand der Membran 2 und dem äußeren Rand, insbesondere der Elektrodenrahmen (1, 11) einerseits die Verwendung lediglich eines Klebefilms zur stoffflüssigen Verbindung der beiden Elektrodenrahmen (1, 11) sowie der Membran 2 mit dem zweiten Elektrodenrahmen 11, wie zuvor beschrieben. Darüber hinaus ergibt sich hierdurch eine Materialeinsparung bei der Membran 2, verglichen mit der Ausbildung einer Membran 2 in der vollen Größe, beispielsweise in der Größe der Bipolarplatte 3.

Da - wie eingangs erwähnt - die Materialkosten der Membran 2 einen erheblichen Anteil an den Gesamtkosten einer Redox-Flow-Zelle darstellen, kann hierdurch eine signifikante Kostenersparung erzielt werden.

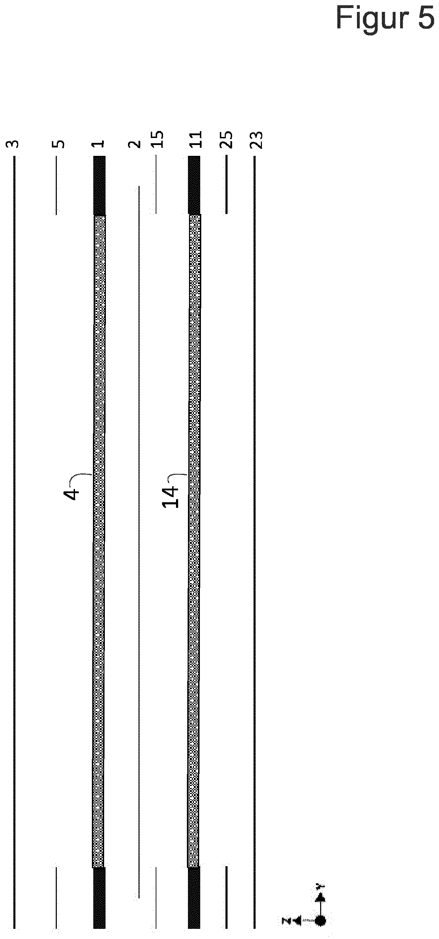

Figur 5 zeigt ein Schnittbild gemäß der Schnittlinie C in Figur 2. Auch hier steht die Schnittebene senkrecht zur Bipolarplatte 3. Das Schnittbild gemäß Figur 5 ist somit mit dem Schnittbild gemäß Figur 4 vergleichbar, wobei jedoch die in den Elektrodenrahmen (1, 11) angeordneten Elektroden (4, 14) dargestellt sind. Hierbei ist ersichtlich, dass die Klebefilme (5, 15 und 25) die Elektroden 4 und 14 nicht überlappen. Die Klebefilme weisen somit die gleiche Aussparung auf, welche auch die Elektrodenrahmen (1, 11) zur Aufnahme der Elektroden (4, 14) aufweisen. Hierdurch wird somit ein Verkleben der Elektroden vermieden.

Wie insbesondere in den Figuren 1 und 2 ersichtlich, bilden die Klebefilme (5, 15 und 25) umlaufende, ununterbrochene Dichtungen zwischen den jeweils benachbarten Elementen aus und wirken somit wie separaten O-Ring-Dichtungen aus dem vorbekannten Stand der Technik.

Insbesondere durchbrechen die Bohrungen 7a und 7b zur Aufnahme von Gewindestangen die Randbereiche der Klebefilme nicht vollständig, so dass eine umlaufende Dichtungswirkung sichergestellt ist.

## Patentansprüche

1. Bauelement für eine Redox-Flow-Zelle,
mit einem Elektrodenrahmen (1,11), einer Elektrode (4,14), einer Membran (2) und einer Bipolarplatte (3),
wobei die Elektrode (4,14) in dem Elektrodenrahmen (1,11) angeordnet und von diesem umfangsseitig umschlossen ist und der Elektrodenrahmen (1,11) zwischen Membran (2) und Bipolarplatte (3) angeordnet ist, **dadurch gekennzeichnet,**
**dass** der Elektrodenrahmen (1,11) mit zumindest der Membran (2) stoffschlüssig mittels Kleben verbunden ist.

2. Bauelement nach Anspruch 1,
**dadurch gekennzeichnet,**
**dass** der Elektrodenrahmen (1) zusätzlich mit der Bipolarplatte (3) stoffschlüssig verbunden, bevorzugt mittels Kleben verbunden ist.

3. Bauelement nach einem der vorangegangenen Ansprüche,
**dadurch gekennzeichnet,**
**dass** die stoffschlüssige Verbindung zwischen Elektrodenrahmen (1,11) und/oder Bipolarplatte (3) mittels einer Klebefolie ausgebildet ist.

4. Bauelement nach einem der vorangegangenen Ansprüche,
**dadurch gekennzeichnet,**
**dass** mittels der stoffschlüssigen Verbindung eine flüssigkeitsdichte Abdichtung zwischen Elektrodenrahmen (1,11) und Membran (2) zumindest abgesehen von einem oder mehreren Kanälen zum Zu- und/oder Abführen eines flüssigen Elektrolyten zu der Elektrode (4,14) ausgebildet ist, vorzugsweise,
**dass** eine umlaufende flüssigkeitsdichte stoffschlüssige Verbindung zwischen Elektrodenrahmen (1,11) und Membran (2) ausgebildet ist.

5. Bauelement nach zumindest Anspruch 2,
**dadurch gekennzeichnet,**
**dass** mittels der stoffschlüssigen Verbindung eine flüssigkeitsdichte Abdichtung zwischen Elektrodenrahmen (1) und Bipolarplatte (3) zumindest abgesehen von einem oder mehreren Kanälen zum Zu- und/oder Abführen eines flüssigen Elektrolyten zu der Elektrode (4,14) ausgebildet ist, vorzugsweise,
**dass** eine umlaufende flüssigkeitsdichte stoffschlüssige Verbindung zwischen Elektrodenrahmen (1) und Bipolarplatte (3) ausgebildet ist.

6. Bauelement nach einem der vorangegangenen Ansprüche,
**dadurch gekennzeichnet,**
**dass** die Membran (2) den Elektrodenrahmen (1,11) umlaufend überlappt, insbesondere, dass die Membran (2) den Elektrodenrahmen (1,11) um weniger als 2 cm, weiter bevorzugt um weniger als 1,5 cm, insbesondere um weniger als 1 cm überlappt und/oder die Membran den Rahmen in Richtung der Länge und in Richtung der Breite um weniger als 15%, bevorzugt um weniger als 10%, weiter bevorzugt um weniger als 5%, bezogen auf Länge bzw. Breite des Rahmens, überlappt.

7. Bauelement nach einem der vorangegangenen Ansprüche,
**dadurch gekennzeichnet,**
**dass** eine vollintegrierte Einzelzelle ausgebildet ist, welche ein Bauelement gemäß einem der vorangegangenen Ansprüche aufweist, mit dem Elektrodenrahmen (1) als ersten Elektrodenrahmen, der Elektrode (4) als erste Elektrode, der Bipolarplatte (3) als erste Bipolarplatte (3) und der Membran (2) zusätzlich mit zumindest einem zweiten Elektrodenrahmen (11) und einer zweiten Elektrode (14),
wobei die Einzelzelle einen Schichtaufbau mit mittelbar oder unmittelbar angeordneten Elementen in der Abfolge erste Bipolarplatte, erster Elektrodenrahmen (1) mit erster Elektrode (4), Membran (2), zweiter Elektrodenrahmen (11) mit zweiter Elektrode (14) aufweist und
wobei eine stoffschlüssige Verbindung, bevorzugt mittels Kleben, zumindest zwischen erster Bipolarplatte und erstem Elektrodenrahmen (1), zwischen erstem Elektrodenrahmen (1) und Membran (2) sowie zwischen Membran (2) und zweitem Elektrodenrahmen (11) besteht, insbesondere, dass die vollintegrierte Einzelzelle zusätzlich eine zweite Bipolarplatte umfasst, und einen Schichtaufbau mit mittelbar oder unmittelbar angeordneten Elementen in der Abfolge erste Bipolarplatte, erster Elektrodenrahmen (1) mit erster Elektrode (4), Membran (2), zweiter Elektrodenrahmen (11) mit zweiter Elektrode (14), zweite Bipolarplatte aufweist, wobei bevorzugt die zweite Bipolarplatte stoffschlüssig, bevorzugt mittels Kleben, mit dem zweiten Elektrodenrahmen verbunden ist.

8. Bauelement nach einem der vorangegangenen Ansprüche,
**dadurch gekennzeichnet,**
**dass** der Elektrodenrahmen (1,11) Kanäle zum Zu- und Ableiten eines flüssigen Elektrolyten zu der Elektrode (4,14) aufweist, insbesondere als Leitungen im Elektrodenrahmen (1,11) ausgebildet Kanäle.

9. Zellzusammenschluss für eine Redox-Flow-Batterie,
mit mehreren übereinander angeordneten vollintegrierte Einzelzellen gemäß Anspruch 8, insbesondere mit mehreren übereinander angeordneten, stoffschlüssig, bevorzugt mittels Kleben, verbundenen, vollintegrierte Einzelzellen gemäß Anspruch 8.

10. Verfahren zur Herstellung eines Bauelementes für eine Redox-Flow-Zelle, wobei ein Elektrodenrahmen mit einer Elektrode (4,14) zwischen einer Membran (2) und einer Bipolarplatte (3) angeordnet wird,
**dadurch gekennzeichnet,**
**dass** der Elektrodenrahmen (1,11) zumindest mit der Membran (2) mittels Kleben stoffschlüssig verbunden wird.

11. Verfahren nach Anspruch 10,
**dadurch gekennzeichnet**
der Elektrodenrahmen (1) zusätzlich mit der Bipolarplatte (3) stoffschlüssig verbunden, insbesondere verklebt wird.

12. Verfahren nach einem der vorangegangenen Ansprüche 10 bis 11,
**dadurch gekennzeichnet,**
**dass** eine vollintegrierte Einzelzelle ausgebildet wird indem zumindest die Bipolarplatte (3) als erste Bipolarplatte mit dem Elektrodenrahmen (1) als ersten Elektrodenrahmen stoffschlüssig, bevorzugt mittels Kleben, verbunden wird, der erste Elektroden rahmen mit der Membran (2) als erste Membran stoffschlüssig, bevorzugt mittels Kleben, verbunden wird und die Membran (2) mit einem zweiten Elektrodenrahmen (11) stoffschlüssig, bevorzugt mittels Kleben, verbunden wird, vorzugsweise, dass zusätzlich der erste und der zweite Elektrodenrahmen unmittelbar stoffschlüssig miteinander verbunden werden, bevorzugt mittels eines Klebstoffs.

13. Verfahren nach Anspruch 12,
**dadurch gekennzeichnet,**
**dass** ein integrierter Zellzusammenschluss aus mehreren vollintegrierten Einzelzellen ausgebildet wird, wobei zunächst mehrere vollintegrierte Einzelzellen gemäß Anspruch 12 ausgebildet werden und in einem nachfolgenden Verfahrensschritt der Stack aus Einzelzellen mittels stoffschlüssigem Verbinden, bevorzugt mittels Kleben, des zweiten Elektrodenrahmens einer Einzelzelle mit der Bipolarplatte (23) der im Zusammenschluss benachbarten Einzelzelle verbunden wird, insbesondere, dass die Einzelzellen unter Zwischenfügung eines Klebemittels aneinander angeordnet werden und in einem gemeinsamen Verfahrensschritt die stoffschlüssige Verbindung der Einzelzellen miteinander erfolgt.

14. Verfahren nach Anspruch 12,
**dadurch gekennzeichnet,**
**dass** ein integrierter Zellzusammenschluss ausgebildet wird, wobei zunächst mehrere vollintegrierte Einzelzellen gemäß Anspruch 12 ausgebildet werden, welche vollintegrierten Einzelzellen mit einer zweiten Bipolarplatte ausgebildet werden, welche zweite Bipolarplatte an der der Membran abgewandten Seite stoffschlüssig, bevorzugt mittels Kleben, mit dem zweiten Elektrodenrahmen verbunden wird und
**dass** mehrere Zwischenelemente ausgebildet werden, welche jeweils einen ersten Elektrodenrahmen mit einer ersten Elektrode, eine Membran und einen zweiten Elektrodenrahmen mit einer zweiten Elektrode umfassen,
wobei in dem integrierten Zellzusammenschluss abwechselnd eine vollintegrierte Einzelzelle und ein Zwischenelement angeordnet wird, insbesondere, dass das erste und das letzte Element des Zellzusammenschlusses jeweils eine vollintegrierte Einzelzelle ist.

15. Verfahren nach Anspruch 14,
**dadurch gekennzeichnet,**
**dass** zumindest die Elemente erster Elektrodenrahmen, Membran und zweiter Elektrodenrahmen des Zwischenelementes vor Ausbilden des integrierten Zellzusammenschlusses stoffschlüssig miteinander verbunden werden.

## Claims

1. Component for a redox flow cell,
having an electrode frame (1, 11), an electrode (4, 14), a membrane (2) and a bipolar plate (3),
wherein the electrode (4, 14) is arranged in the electrode frame (1, 11) and is enclosed around its circumference by the latter and the electrode frame (1, 11) is arranged between the membrane (2) and the bipolar plate (3),
**characterised in that**
the electrode frame (1, 11) is adhesively bonded to at least the membrane (2).

2. Component according to claim 1,
**characterised in that**
the electrode frame (1) is additionally bonded, preferably adhesively bonded, to the bipolar plate (3).

3. Component according to either one of the preceding claims,
**characterised in that**
the bonded connection between the electrode frame (1, 11) and/or the bipolar plate (3) is formed by means of an adhesive film.

4. Component according to any one of the preceding claims,
**characterised in that**
by means of the bonded connection a fluid-tight seal is formed between the electrode frame (1, 11) and the membrane (2), at least apart from one or more channels for supplying and/or discharging a fluid electrolyte to/from the electrode (4, 14);
preferably, a circumferential fluid-tight bonded connection is formed between the electrode frame (1, 11) and the membrane (2).

5. Component according to at least claim 2,
**characterised in that**
by means of the bonded connection a fluid-tight seal is formed between the electrode frame (1) and the bipolar plate (3), at least apart from one or more channels for supplying and/or discharging a fluid electrolyte to/from the electrode (4, 14);
preferably, a circumferential fluid-tight bonded connection is formed between the electrode frame (1) and the bipolar plate (3).

6. Component according to any one of the preceding claims,
**characterised in that**
the membrane (2) overlaps the electrode frame (1, 11) around the circumference; especially, the membrane (2) overlaps the electrode frame (1, 11) by less than 2 cm, more preferably by less than 1.5 cm, especially by less than 1 cm, and/or the membrane overlaps the frame in the length direction and in the width direction by less than 15%, preferably by less than 10 %, more preferably by less than 5 %, based on the length and the width of the frame, respectively.

7. Component according to any one of the preceding claims,
**characterised in that**
a fully integrated individual cell is formed which has a component according to any one of the preceding claims, having the electrode frame (1) as first electrode frame, the electrode (4) as first electrode, the bipolar plate (3) as first bipolar plate (3) and the membrane (2), additionally with at least one second electrode frame (11) and a second electrode (14),
wherein the individual cell has a layer structure having elements indirectly or directly arranged in the sequence: first bipolar plate, first electrode frame (1) with the first electrode (4), membrane (2), second electrode frame (11) with the second electrode (14), and
wherein there is a bonded connection, preferably an adhesively bonded connection, at least between the first bipolar plate and the first electrode frame (1), between the first electrode frame (1) and the membrane (2), and between the membrane (2) and the second electrode frame (11); especially, the fully integrated individual cell additionally comprises a second bipolar plate, and has a layer structure having elements indirectly or directly arranged in the sequence: first bipolar plate, first electrode frame (1) with the first electrode (4), membrane (2), second electrode frame (11) with the second electrode (14), second bipolar plate, with the second bipolar plate preferably being bonded, preferably adhesively bonded, to the second electrode frame.

8. Component according to any one of the preceding claims,
**characterised in that**
the electrode frame (1, 11) has channels for supplying and discharging a fluid electrolyte to/from the electrode (4, 14), especially channels in the form of lines formed in the electrode frame (1, 11).

9. Cell combination for a redox flow battery,
having a plurality of fully integrated individual cells according to claim 8 arranged one on top of the other, especially having a plurality of fully integrated individual cells according to claim 8 arranged one on top of the other and bonded, preferably adhesively bonded, to one another.

10. Method for the production of a component for a redox flow cell, wherein an electrode frame with an electrode (4, 14) is arranged between a membrane (2) and a bipolar plate (3),
**characterised in that**
the electrode frame (1, 11) is adhesively bonded at least to the membrane (2).

11. Method according to claim 10,
**characterised in that**
the electrode frame (1) is additionally bonded, especially adhesively bonded, to the bipolar plate (3).

12. Method according to either one of preceding claims 10 and 11,
**characterised in that**
a fully integrated individual cell is formed by bonding, preferably adhesively bonding, at least the bipolar plate (3) as first bipolar plate to the electrode frame (1) as first electrode frame, bonding, preferably adhesively bonding, the first electrode frame to the membrane (2) as first membrane, and bonding, preferably adhesively bonding, the membrane (2) to a second electrode frame (11); preferably, in addition the first and second electrode frames are directly bonded to one another, preferably by means of an adhesive.

13. Method according to claim 12,
**characterised in that**
an integrated cell combination is formed from a plurality of fully integrated individual cells, wherein first a plurality of fully integrated individual cells according to claim 12 are formed and, in a subsequent method step, the stack of individual cells are joined together by bonding, preferably adhesively bonding, the second electrode frame of an individual cell to the bipolar plate (23) of the individual cell that is adjacent in the combination; especially, the individual cells are arranged one against the other with the interposition of an adhesive and, in a common method step, the individual cells are bonded to one another.

14. Method according to claim 12,
**characterised in that**
an integrated cell combination is formed, wherein first a plurality of fully integrated individual cells according to claim 12 are formed, which fully integrated individual cells are formed with a second bipolar plate, which second bipolar plate, on its side remote from the membrane, is bonded, preferably adhesively bonded, to the second electrode frame; and a plurality of intermediate elements are formed which each comprise a first electrode frame with a first electrode, a membrane and a second electrode frame with a second electrode,
wherein in the integrated cell combination a fully integrated individual cell and an intermediate element are arranged alternately; especially, the first and the last element of the cell combination is in each case a fully integrated individual cell.

15. Method according to claim 14,
**characterised in that**
at least the elements: first electrode frame, membrane and second electrode frame of the intermediate element are bonded to one another before the integrated cell combination is formed.

## Revendications

1. Élément de construction pour une cellule à flux redox,
comprenant un cadre d'électrode (1, 11), une électrode (4, 14), une membrane (2) et une plaque bipolaire (3),
dans lequel l'électrode (4, 14) est disposée dans le cadre d'électrode (1, 11) et entourée par celui-ci de manière circonférentielle et le cadre d'électrode (1, 11) est disposé entre la membrane (2) et la plaque bipolaire (3),
**caractérisé en ce que**
le cadre d'électrode (1, 11) est relié à la membrane (2) au moins, d'un seul tenant par collage.

2. Élément de construction selon la revendication 1,
**caractérisé en ce que**
le cadre d'électrode (1) est relié en plus à la plaque bipolaire (3), d'un seul tenant, préférentiellement par collage.

3. Élément de construction selon l'une des revendications précédentes,
**caractérisé en ce que**
la liaison d'un seul tenant entre le cadre d'électrode (1, 11) et/ou la plaque bipolaire (3) est formée au moyen d'une feuille adhésive.

4. Élément de construction selon l'une des revendications précédentes,
**caractérisé en ce que**
au moyen de la liaison d'un seul tenant, une étanchéité au liquide est formée entre le cadre d'électrode (1, 11) et la membrane (2) au moins, à l'exception d'un ou plusieurs canaux pour amener et/ou évacuer un électrolyte liquide à l'électrode (4, 14),
de préférence,
une liaison circonférentielle d'un seul tenant étanche au liquide est formée entre le cadre d'électrode (1, 11) et la membrane (2).

5. Élément de construction selon au moins la revendication 2,
**caractérisé en ce que**
au moyen de la liaison d'un seul tenant, une étanchéité au liquide est formée entre le cadre d'électrode (1) et la plaque bipolaire (3) au moins, à l'exception d'un ou plusieurs canaux pour amener et/ou évacuer un électrolyte liquide à l'électrode (4, 14),
de préférence,
une liaison circonférentielle d'un seul tenant étanche au liquide est formée entre le cadre d'électrode (1) et la plaque bipolaire (3).

6. Élément de construction selon l'une des revendications précédentes,
**caractérisé en ce que**
la membrane (2) chevauche le cadre d'électrode (1, 11) circonférentiellement, en particulier, la membrane (2) chevauche le cadre d'électrode (1, 11) de moins de 2 cm, plus préférentiellement de moins de 1,5 cm, en particulier de moins de 1 cm et/ou la membrane chevauche le cadre dans la direction de la longueur et dans la direction de la largeur de moins de 15 %, préférentiellement de moins de 10 %, plus préférentiellement de moins de 5 %, par rapport à la longueur ou à la largeur du cadre.

7. Élément de construction selon l'une des revendications précédentes,
**caractérisé en ce que**
une cellule individuelle complètement intégrée est formée, qui comporte un élément de construction selon l'une des revendications précédentes, avec le cadre d'électrode (1) en tant que premier cadre d'électrode, l'électrode (4) en tant que première électrode, la plaque bipolaire (3) en tant que première plaque bipolaire (3) et la membrane (2) en plus avec au moins un deuxième cadre d'électrode (11) et une deuxième électrode (14),
dans lequel la cellule individuelle présente une construction stratifiée avec des éléments disposés indirectement ou directement dans l'ordre première plaque bipolaire, premier cadre d'électrode (1) avec première électrode (4), membrane (2), deuxième cadre d'électrode (11) avec deuxième électrode (14) et
dans lequel une liaison d'un seul tenant, préférentiellement par collage, existe au moins entre le première plaque bipolaire et le premier cadre d'électrode (1), entre le premier cadre d'électrode (1) et la membrane (2) ainsi qu'entre la membrane (2) et le deuxième cadre d'électrode (11), en particulier, la cellule individuelle complètement intégrée comprend en plus une deuxième plaque bipolaire et présente une construction stratifiée avec des éléments disposés indirectement ou directement dans l'ordre première plaque bipolaire, premier cadre d'électrode (1) avec première électrode (4), membrane (2), deuxième cadre d'électrode (11) avec deuxième électrode (14), deuxième plaque bipolaire, dans lequel préférentiellement la deuxième plaque bipolaire est reliée d'un seul tenant, préférentiellement par collage, au deuxième cadre d'électrode.

8. Élément de construction selon l'une des revendications précédentes,
**caractérisé en ce que**
le cadre d'électrode (1, 11) comporte des canaux pour amener et/ou évacuer un électrolyte liquide à l'électrode (4, 14), en particulier des canaux formés en tant que conduites dans le cadre d'électrode (1, 11).

9. Groupement pour une batterie à flux redox,
comprenant plusieurs cellules individuelles complètement intégrées selon la revendication 8 les unes au-dessus des autres, en particulier, comprenant plusieurs cellules individuelles complètement intégrées selon la revendication 8 reliées d'un seul tenant, préférentiellement par collage, les unes au-dessus des autres.

10. Procédé pour la fabrication d'un élément de construction pour une cellule à flux redox, dans lequel un cadre d'électrode comprenant une électrode (4, 14) est disposé entre une membrane (2) et une plaque bipolaire (3),
**caractérisé en ce que**
le cadre d'électrode (1, 11) est relié à la membrane (2) au moins, d'un seul tenant, par collage.

11. Procédé selon la revendication 10,
**caractérisé en ce que**
le cadre d'électrode (1) est relié en plus à la plaque bipolaire (3), d'un seul tenant, en particulier collé.

12. Procédé selon l'une des revendications 10 à 11 précédentes,
**caractérisé en ce que**
on forme une cellule individuelle complètement intégrée en reliant d'un seul tenant, préférentiellement par collage, au moins la plaque bipolaire (3) en tant que première plaque bipolaire au cadre d'électrode (1) en tant que premier cadre d'électrode, en reliant, préférentiellement par collage, le premier cadre d'électrode à la membrane (2) en tant que première membrane et en reliant d'un seul tenant, préférentiellement par collage, la membrane (2) à un deuxième cadre d'électrode (11), de préférence, on relie en plus directement d'un seul tenant, préférentiellement à au moyen d'une colle, les premier et deuxième cadres d'électrode.

13. Procédé selon la revendication 12,
**caractérisé en ce que**
on forme un groupement de cellules intégré à partir de plusieurs cellules individuelles complètement intégrées, dans lequel on forme tout d'abord plusieurs cellules individuelles complètement intégrées selon la revendication 12 et dans une étape de procédé suivante l'empilement de cellules individuelles est relié par liaison d'un seul tenant, préférentiellement par collage, du deuxième cadre d'électrode d'une cellule individuelle à la plaque bipolaire (23) de la cellule individuelle voisine dans le groupement, en particulier, on dispose les cellules individuelles les unes contre les autres en intercalant une colle et dans une étape de procédé commune a lieu la liaison d'un seul tenant des cellules individuelles entre elles.

14. Procédé selon la revendication 12,
**caractérisé en ce que**
on forme un groupement de cellules individuelles intégré, dans lequel on forme tout d'abord plusieurs cellules individuelles complètement intégrées selon la revendication 12, lesquelles cellules individuelles complètement intégrées sont formées avec une deuxième plaque bipolaire, laquelle deuxième plaque bipolaire, sur le côté opposé à la membrane, est reliée d'un seul tenant, préférentiellement par collage, au deuxième cadre d'électrode et
on forme plusieurs éléments intermédiaires qui comprennent chacun un premier cadre d'électrode avec une première électrode, une membrane et un deuxième cadre d'électrode avec une deuxième électrode,
dans lequel une cellule individuelle complètement intégrée et un élément intermédiaire sont disposés en alternance dans le groupement de cellules intégré, en particulier, les premier et dernier éléments du groupement de cellules sont chacun une cellule individuelle complètement intégrée.

15. Procédé selon la revendication 14,
**caractérisé en ce qu'**au moins les éléments premier cadre d'électrode, membrane et deuxième cadre d'électrode de l'élément intermédiaire sont reliés entre eux d'un seul tenant avant la formation du groupement de cellules intégré.
